# EUROPÄISCHE PATENTANMELDUNG

(11) **EP 1 595 886 A1**
(43) Veröffentlichungstag der Anmeldung: **16.11.2005**
(21) Anmeldenummer: 05009752.6
(22) Anmeldetag: 04.05.2005
(51) Int. Cl.: C07F 9/50, C07F 9/46, C07F 9/53, C07F 15/00, B01J 31/24, C07B 53/00, C07C 45/50

(54) **Chirale Diphosphinoterpene und deren Übergangsmetallkomplexe**

(30) Priorität: 10.05.2004 DE 102004022898
(71) Anmelder: LANXESS Deutschland GmbH, 51369 Leverkusen (DE)
(72) Erfinder: Knochel, Paul, Prof. Dr., 82131 Gauting (DE); Bunlaksananusorn, Tanasari, Dr., 51373 Leverkusen (DE); Gavryushin, Andrei, 82110 Germering (DE)

(57) **Zusammenfassung**

Die vorliegende Erfindung betrifft chirale Diphosphinoterpene und deren Übergangsmetallkomplexe, ein Verfahren zur Herstellung chiraler Diphosphinoterpene bzw. deren Oxide und Übergangsmetallkomplexe enthaltend die chiralen Diphosphinoterpene. In einem weiteren Aspekt betrifft die Erfindung die Verwendung der chiralen Diphosphinoterpene bzw. deren Übergangsmetallkomplexe in asymmetrischen Synthesen.

## Beschreibung

Die vorliegende Erfindung betrifft chirale Diphosphinoterpene und deren Übergangsmetallkomplexe. Sowie ein Verfahren zur Herstellung chiraler Diphosphinoterpene bzw. deren Oxide. In einem weiteren Aspekt betrifft die Erfindung die Verwendung der chiralen Diphosphinoterpene bzw. deren Übergangsmetallkomplexe in asymmetrischen Synthesen.

Enantiomerenangereicherte chirale Verbindungen sind wertvolle Ausgangssubstanzen zur Herstellung von Agrochemikalien und Pharmazeutika. Dabei hat die asymmetrische Katalyse für die Synthese solcher enantiomerenangereicherten chiralen Verbindungen eine große technische Bedeutung gewonnen.

Die Vielzahl der Publikationen auf dem Gebiet der asymmetrischen Synthese zeigen deutlich, dass Übergangsmetallkomplexe von Diphosphorverbindungen als Katalysatoren in asymmetrisch geführten Reaktionen besonders geeignet sind. Insbesondere haben Übergangsmetallkomplexe von Diphosphorverbindungen als Katalysatoren in asymmetrischen Hydrierungen von C=O, C=N und C=C-Bindungen, Hydrocyanierungen und Hydroformylierungen Eingang in technische Prozesse gefunden.

Aus Haltermann, Organometallics, 9, (1), 1990, S. 273-275 ist (2R,3S)-2-[(diphenylphosphanyl)-methyl]-3-diphenylphosphanyl-bicyclo[3.3.1]heptan und ein daraus herstellbarer Palladiumkomplex bekannt. Über die Anwendung in der asymmetrischen Synthese werden keine Angaben gemacht.

Es bestand das Bedürfnis, ein in seinen sterischen und elektronischen Eigenschaften leicht variierbares Ligandensystem zu entwickeln, dessen Übergangsmetallkomplexe als Katalysatoren in der asymmetrischen Synthese wie insbesondere asymmetrischen Hydrierungen neben hoher Enantioselektivität auch hohe Umsatzraten ermöglichen. Weiterhin bestand das Bedürfnis für ein solches Ligandensystem und die entsprechenden Vorstufen einen bequemen Zugang zu entwickeln.

Es wurden nun Verbindungen der Formel (I) gefunden, 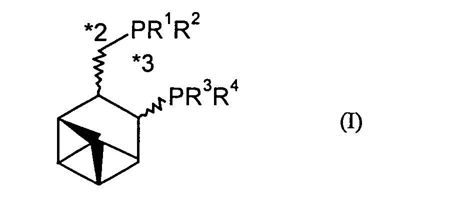 in der
- *2 und *3 jeweils ein stereogenes Kohlenstoffatom markieren, das in R- oder S- Konfiguration vorliegt, wobei die Substituenten jedoch bezogen auf die verbindende Kohlenstoffbindung cisoid angeordnet sind und
- R¹, R², R³ und R⁴ jeweils unabhängig voneinander stehen können für: Alkyl, Arylalkyl oder Aryl oder einen heterocyclischen Rest mit insgesamt 4 bis 16 Kohlenstoffatomen oder R¹ und R² und/oder R³ und R⁴ jeweils zusammen für Alkylen stehen.

Der Rahmen der Erfindung umfasst alle oben stehenden und im Folgenden aufgeführten, allgemeinen oder in Vorzugsbereichen genannten Restedefmitionen, Parameter und Erläuterungen in beliebiger Kombination untereinander, also auch zwischen den jeweiligen Bereichen und Vorzugsbereichen.

**Aryl** steht im Rahmen der Erfindung sofern nicht gesondert vermerkt bevorzugt für carbocyclische aromatische Reste mit 6 bis 24 Gerüstkohlenstoffatomen oder heteroaromatische Reste mit 5 bis 24 Gerüstkohlenstoffatomen, in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können. Weiterhin können die carbocyclischen aromatischen Reste oder heteroaromatische Reste mit bis zu fünf gleichen oder verschiedenen Substituenten pro Cyclus substituiert sein, ausgewählt aus der Gruppe Hydroxy, Fluor, Nitro, Cyano, freies oder geschütztes Formyl, C₁-C₁₂-Alkyl, C₅-C₁₄-Aryl, C₆-C₁₅-Arylalkyl, -PO-[(C₁-C₈)-Alkyl]₂, -PO-[(C₅-C₁₄)-Aryl]_{2,} -PO-[(C₁-C₈)-Alkyl)(C₅-C₁₄)-Aryl)], Tri(C₁-C₈-alkyl)siloxyl oder Resten der Formeln (IIa) bis (IIf). Gleiches gilt für den Arylteil eines Arylalkyl-Restes.

Beispielsweise steht Aryl besonders bevorzugt für Phenyl, Naphthyl oder Anthracenyl, das gegebenenfalls einfach, zweifach oder dreifach durch Reste substituiert ist, die jeweils unabhängig voneinander ausgewählt sind aus der Gruppe C₁-C₆-Alkyl, C₅-C₁₄-Aryl, C₁-C₆-Alkoxy, C₁-C₆-Alkoxycarbonyl, Halogen, Hydroxy, Nitro oder Cyano.

**Alkyl** bzw. **Alkylen** bzw. **Alkoxy** steht im Rahmen der Erfmdung sofern nicht gesondert vermerkt bevorzugt jeweils unabhängig für einen geradkettigen, cyclischen, verzweigten oder unverzweigten Alkyl- bzw. Alkylen- bzw. Alkoxy-Rest, der gegebenenfalls durch C₁-C₄-Alkoxy-Reste weiter substituiert sein kann. Gleiches gilt für den Alkylenteil eines Arylalkyl-Restes.

Beispielsweise steht Alkyl besonders bevorzugt für Methyl, Ethyl, n-Propyl, Isopropyl, n-Butyl, tert.-Butyl, n-Pentyl, Cyclohexyl und n-Hexyl, n-Heptyl, n-Octyl, iso-Octyl, n-Decyl und n-Dodecyl.

Beispielsweise steht Alkylen bevorzugt 1,3-Propylen, 1,4-Butylen, 1,5-Pentylen, 1,6-Hexylen, S,S-oder R,R-2,5-Hexylen, 1,4-Cyclohexylen, 1,2-Cyclohexylen und 1,8-Octylen.

Beispielsweise steht Alkoxy bevorzugt für Methoxy, Ethoxy, Isopropoxy, n-Propoxy, n-Butoxy, tert.-Butoxy und Cyclohexyloxy.

**Arylalkyl** steht im Rahmen der Erfindung sofern nicht gesondert vermerkt bevorzugt jeweils unabhängig für einen geradkettigen, cyclischen, verzweigten oder unverzweigten Alkylrest, der einfach oder mehrfach, besonders bevorzugt einfach durch Arylreste gemäß vorstehender Defmition substituiert ist.

**Halogenalkyl** bzw. **Halogenalkylen** steht im Rahmen der Erfmdung sofern nicht gesondert vermerkt bevorzugt jeweils unabhängig für einen geradkettigen, cyclischen, verzweigten oder unverzweigten Alkylrest, der mit einem, mehreren oder vollständig mit Halogenatomen unabhängig voneinander ausgewählt aus der Gruppe Fluor, Chlor, Brom und Iod substituiert sein kann.

Beispielsweise steht Halogenalkyl besonders bevorzugt für Trifluormethyl, Trichlormethyl, 2,2,2-Trifluorethyl, Pentafluorethyl und Nonafluorbutyl, C₁-C₈-Fluoralkyl für Trifluormethyl, 2,2,2-Trifluorethyl, Pentafluorethyl und Nonafluorbutyl.

Im Folgenden werden bevorzugte Verbindungen der Formeln (I) definiert.
- Die Verbindungen der Formel (I) sind bevorzugt enantiomerenangereichert.
- R¹ und R² bzw. R³ und R⁴ stehen bevorzugt jeweils paarweise identisch für: Alkyl oder Aryl oder einen heterocyclischen Rest mit insgesamt 4 bis 9 Kohlenstoffatomen oder jeweils zusammen für Alkylen.

Besonders bevorzugt stehen R¹ und R² bzw. R³ und R⁴ jeweils paarweise identisch für: C₃-C₆-Alkyl, gegebenenfalls einfach, zweifach oder dreifach durch C₁-C₆-Alkyl, C₁-C₆-Halogenalkyl, C₁-C₆-Alkoxy, Chlor oder Fluor substituiertes Phenyl oder jeweils zusammen für C₄-C₆-Alkylen. Ganz besonders bevorzugt sind alle vier Reste R¹, R², R³ und R⁴ identisch.

Ganz besonders bevorzugte Verbindungen der Formel (I) sind:
(2S,3S)-3-Diphenylphosphanyl-2-[(diphenylphosphanyl)-methyl]-6,6-dimethyl-bicyclo[3.1.1]heptan, (2R,3R)- 3-Diphenylphosphanyl-2-[(diphenylphosphanyl)-methyl]-6,6-dimethyl-bicyclo-[3.1.1]heptan, (2R,3R)- 3-Diphenylphosphanyl-2-[(diphenylphosphanyl)-methyl]-6,6-dimethylbicyclo[3.1.1]heptan und (2R,3R)- 3-Diphenylphosphanyl-2-[(diphenylphosphanyl)-methyl]-6,6-dimethyl-bicyclo[3.1.1]heptan.

Weiterhin sind von der Erfindung auch Komplexe von Verbindungen der Formel (I) mit Boranen, wie z.B. Boran oder Borabicyclononan (BBN-9) umfasst.

Der Begriff stereoisomerenangereichert bzw. enantiomerenangereichert umfasst im Sinne der Erfindung stereoisomerenreine bzw. enantiomerenreine Verbindungen und Mischungen von stereoisomeren bzw. enantiomeren Verbindungen in denen ein Stereoisomeres bzw. Enantiomeres in einem größeren relativen Anteil als das oder die anderen Stereoisomere bzw. Enantiomere, bevorzugt in einem relativen Anteil von über 50 % bis 100 Mol-%, besonders bevorzugt 90 bis 100 Mol-% und ganz besonders bevorzugt 98 bis 100 Mol-%, vorliegt.

Die Verbindungen der Formel (I) lassen sich über ein ebenfalls erfindungsgemäßes Verfahren herstellen.

Dieses Verfahren ist dadurch gekennzeichnet, dass
- in einem Schritt A) Verbindungen der Formel (IIa) oder (IIb) 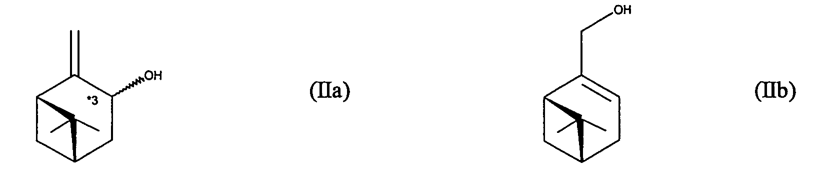 in der *3 die für Formel (I) genannten Bedeutungen und Vorzugsbereiche besitzen mit Verbindungen der Formel (IIIa) bzw. (IIIb)

   Hal-PR¹R² (IIIa)

   Hal-PR³R⁴ (IIIb)

   zu Verbindungen der Formel (IVa) und (IVb) umgesetzt werden 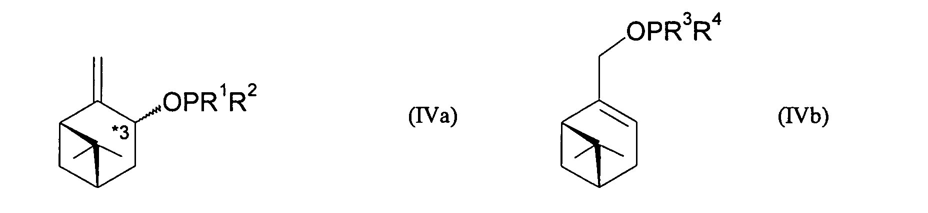 und
- in einem Schritt B) die Verbindungen der Formel (IVa) und (IVb) gegebenenfalls in einem organischen Lösungsmittel durch Erhitzen auf mindestens 60°C in Verbindungen der Formel (Va) und (Vb) überführt werden 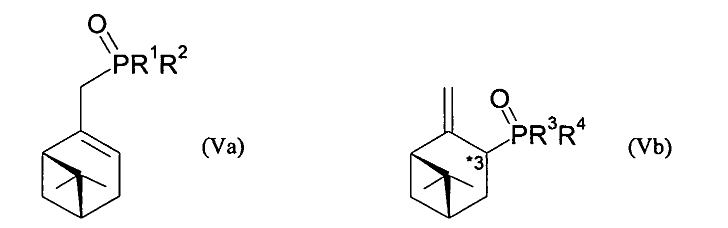
- und in einem Schritt C) die Verbindungen der Formel (Va) und (Vb) durch Umsetzung mit einem Boran und anschließende Oxidation in Verbindungen der Formel (VIa) und (VIb) überführt werden 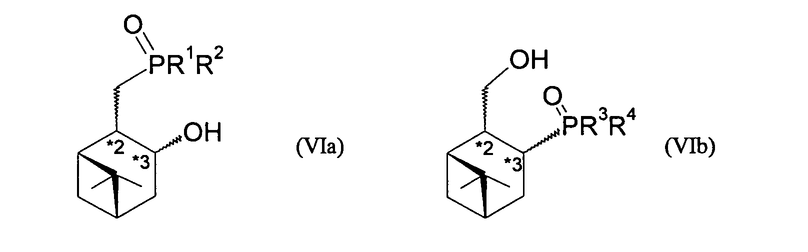
- und in einem Schritt D) die Verbindungen der Formel (VIa) und (VIb) durch Reduktion in Verbindungen der Formel (VIIa) und (VIIb) überführt werden 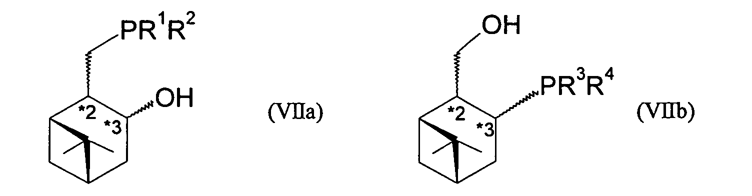
- und in einem Schritt E) die Verbindungen der Formel VIIa) und (VIIb) durch Umsetzung mit Verbindungen der Formel (VIII)

   Hal-O₂SR⁵ (VIII)

   in Verbindungen der Formel (IXa) und (IXb) überführt werden 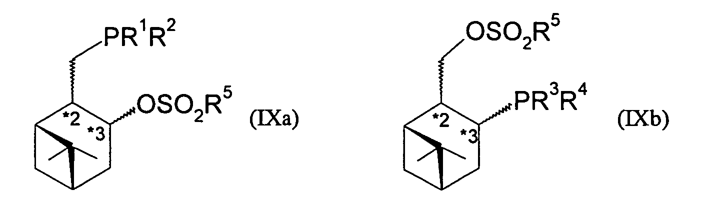
- und in einem Schritt F) die Verbindungen der Formel (IX) durch Umsetzung mit Verbindungen der Formel (Xa) bzw. (Xb)

   HPR³R⁴ (Xa)

   HPR¹R² (Xb)

   in die Verbindungen der Formel (I) überführt werden.

In den Formeln (IIa), (IIb), (IIIa), (IIIb) (IVa), (IVb), (Va), (Vb), (VIa), (VIb), (VIIa), (VIIb), (IXa), (IXb). (Xa) und (Xb) besitzen *2 und *3, R¹, R², R³ und R⁴ jeweils die gleichen Bedeutungen und Vorzugsbereiche, wie sie unter der Formel (I) bereits beschrieben wurden.

Weiterhin steht R⁵ in den Formeln (VIII), (IXa) und (IXb) für Alkyl, Fluoralkyl, Arylalkyl, oder Aryl, bevorzugt für Alkyl und Fluoralkyl.

In den Formeln (IIIa) und (IIIb) und (VIII) steht Hal jeweils für Chlor, Brom oder Iod, bevorzugt für Chlor.

Die Verbindungen der Formeln ((IVa), (IVb), (Va), (Vb), (VIa), (VIb), (VIIa), (VIIb), (IXa) und (IXb) sind bislang unbekannt und daher als unverzichtbare Intermediate von der Erfindung ebenfalls umfasst. Es gelten dabei die für *1, *2 und *3, R¹, R², R³, R⁴ und R⁵ oben genannten Bedeutungen und Vorzugsbereiche in gleicher Weise.

Weiterhin sind von der Erfindung auch Komplexe von Verbindungen der Formel (VIIa) und (VIIb) mit Boranen, wie z.B. Boran oder Borabicyclononan (BBN-9) umfasst.

Weiterer Gegenstand der Erfindung sind Verfahren, die die nachstehenden Schritte umfassen, wie sie vorstehend beschrieben wurden:
- F) oder A)
- E) und F) oder A) und B)
- D), E) und F) oder A), B) und C)
- C), D), E) und F) oder A), B) C) und D)
- B), C), D), E) und F) oder A), B), C), D) und E)

Die einzelnen Schritte sind in ihrer chemischen Natur prinzipiell bereits bekannt und können in analoger Weise auf die erfindungsgemäßen Verbindungen angewandt werden.

### Bevorzugte Verbindungen der Formel (IIa) und (IIb) sind trans-Pinocarveol und Myrtenol

Eine bevorzugte Verbindung der Formeln (IIIa) und (IIIb) ist Chlordiphenylphosphin.

Bevorzugte Verbindungen der Formel (IVa) und (IVb) sind:
O-Diphenylphosphanyl-trans-pinopcarveol und O-Diphenylphosphanyl-myrtenol

Bevorzugte Verbindungen der Formel (Va) und (Vb) sind:
2-(Diphenyl-phosphinoylmethyl)-6,6-dimethyl-bicyclo[3.1.1]hept-2-en und (R)-3-(Diphenylphosphinoyl)-6,6-dimethyl-2-methylene-bicyclo[3.1.1]heptaneBevorzugte Verbindungen der Formel (VIa) und (VIb) sind:
(2S,3R)-2-(Diphenyl-phosphinoylmethyl)-6,6-dimethyl-bicyclo[3.1.1]heptan-3-ol und (2R,3R)[3-(Diphenyl-phosphinoyl)-6,6-dimethyl-bicyclo[3.1.1]hept-2-yl]-methanol

Bevorzugte Verbindungen der Formel (VIIa) und (VIIb) sind:
(2S,3R)-2-(Diphenyl-phosphanylmethyl)-6,6-dimethyl-bicyclo[3.1.1]heptan-3-ol und (2R,3R)[3-(Diphenyl-phosphanyl)-6,6-dimethyl-bicyclo[3.1.1]hept-2-yl]-methanolBevorzugte Verbindungen der Formel (IXa) und (IXb) sind:
(2S,3R)-2-(Diphenyl-phosphanylmethyl)-6,6-dimethyl-3-methansulfonyloxy-bicyclo[3.1.1]heptan und (2R,3R)[3-(Diphenyl-phosphanyl)-6,6-dimethyl-bicyclo[3.1.1]hept-2-yl]-1-methansulfonyloxy-methan

Eine bevorzugte Verbindung der Formeln (Xa) und (Xb) ist Diphenylphosphin.

Auf beschriebene Weise sind die Verbindungen der Formel (I) in hohen Ausbeuten in effizienter Weise zugänglich.

Die Erfindung umfasst weiterhin Übergangsmetallkomplexe, die die erfindungsgemäßen Verbindungen der Formel (I) enthalten.

Übergangsmetallkomplexe sind bevorzugt solche von Ruthenium, Osmium, Cobalt, Rhodium, Iridium, Nickel, Palladium, Platin und Kupfer, bevorzugt solche von Ruthenium, Rhodium, Iridium, Nickel, Palladium und Platin, besonders bevorzugt solche von Ruthenium, Rhodium, Iridium und Palladium.

Die erfindungsgemäßen Übergangsmetallkomplexe eignen sich insbesondere als Katalysatoren. Daher sind von der Erfindung auch Katalysatoren umfasst, die die erfindungsgemäßen Übergangsmetallkomplexe enthalten.

Als Katalysatoren können beispielsweise entweder isolierte Übergangsmetallkomplexe eingesetzt werden oder solche Übergangsmetallkomplexe, die durch Umsetzung von Übergangsmetallverbindungen und Verbindungen der Formel (I) erhältlich sind.

Isolierte Übergangsmetallkomplexe, die die Verbindungen der Formel (I) enthalten, sind vorzugsweise solche, in denen das Verhältnis von Übergangsmetall zu Verbindung der Formel (I) 1:1 beträgt.

Bevorzugt sind dabei die erfindungsgemäßen Verbindungen der Formel (XI)

[(I)L¹ ₂M][An¹] (XI)

in der (I) für Verbindungen der Formel (I) mit der dort genannten Bedeutung und deren Vorzugsbereichen steht und
M für Rhodium oder Iridium und
- L¹: jeweils für ein C₂-C₁₂-Alken wie beispielsweise Ethylen oder Cycloocten oder ein Nitril wie beispielsweise Acetonitril, Benzonitril oder Benzylnitril steht, oder
- L¹₂: zusammen für ein (C₄-C₁₂)-Dien wie beispielsweise Bicyclo[2.1.1]hepta-2,5-dien (Nor bornadien) oder 1,5-Cyclooctadien steht und
- [An¹]: für ein Anion, bevorzugt für Methansulfonat, Trifluormethansulfonat, Tetrafluoroborat, Hexafluorophosphat, Perchlorat, Hexafluoroantimonat, Tetra(bis-3,5-trifluromethylphenyl)-borat oder Tetraphenylborat steht.

Bevorzugte Übergangsmetallkomplexe sind solche, die durch Umsetzung von Übergangsmetallverbindungen und Verbindungen der Formel (I) erhältlich sind.

Geeignete Übergangsmetallverbindungen sind beispielsweise solche der Formel

M(An²)_{q} (XIIa)

in der
- M: für Rhodium, Iridium, Ruthenium, Nickel, Paladium, Platin oder Kupfer und
- An²: für Chlorid, Bromid, Acetat, Nitrat, Methansulfonat, Trifluormethansulfonat oder Acetyl acetonat und
- q: für Rhodium, Iridium und Ruthenium für 3, für Nickel, Palladium und Platin für 2 und für Kupfer für 1 steht,
oder Übergangsmetallverbindungen der Formel (XIIb)

M(An³)_{q}L¹ ₂ (XIIb)

in der
- M: für Ruthenium, Iridium, Ruthenium, Nickel, Palladium, Platin oder Kupfer und
- An³: für Chlorid, Bromid, Acetat, Acetylacetonat, Methansulfonat oder Trifluormethansulfonat, Tetrafluoroborat oder Hexafluorophosphat, Perchlorat, Hexafluoroantimonat, Tetra(bis-3,5-trifluromethylphenyl)-borat oder Tetraphenylborat steht und
- q: für Rhodium und Iridium für 1, für Ruthenium, Nickel, Palladium und Platin für 2 und für Kupfer für 1 steht,
- L¹: jeweils für ein C₂-C₁₂-Alken wie beispielsweise Ethylen oder Cycloocten oder ein Nitril wie beispielsweise Acetonitril, Benzonitril oder Benzylnitril steht, oder
- L¹₂: zusammen für ein (C₄-C₁₂)-Dien wie beispielsweise Bicyclo[2.1.1]hepta-2,5-dien (Norbornadien) oder 1,5-Cyclooctadien steht
oder Übergangsmetallverbindungen der Formel (XXIIc)

[ML²An¹ ₂]₂ (XIIc)

in der
- M: für Ruthenium und
- L²: für Arylreste wie zum Beispiel Cymol, Mesityl, Phenyl oder Cyclooctadien, Norbornadien oder Methylallyl steht
oder Übergangsmetallverbindungen der Formel (XXIId)

Met³ _{q}[M(An⁴)₄] (XXIId)

in der
- M: für Palladium, Nickel, Iridium oder Rhodium und
- An⁴: für Chlorid oder Bromid steht und
- Me: für Lithium, Natrium, Kalium, Ammonium oder organisches Ammonium steht und
- q: für Rhodium und Iridium für 3, für Nickel, Palladium und Platin für 2 steht,
oder Übergangsmetallverbindungen der Formel (XXIIe)

[M(L³)₂]An⁵ (XXIIe)

in der
- M: für Iridium oder Rhodium und
- L³: für (C₄-C₁₂)-Dien wie beispielsweise Bicyclo[2.1.1]hepta-2,5-dien (Norbornadien) oder 1,5-Cyclooctadien steht und
- An⁵: für ein nicht oder schwach koordinierendes Anion wie zum Beispiel Methansulfonat, Trifluormethansulfonat, Tetrafluoroborat, Hexafluorophosphat, Perchlorat, Hexafluoroantimonat, Tetra(bis-3,5-trifluromethylphenyl)-borat oder Tetraphenylborat steht.

Darüber hinaus sind als Übergangsmetallverbindungen beispielsweise Ni(1,5-Cyclooctadien)₂, Pd₂(dibenzylidenaceton)₃, Pd[PPh₃]₄, Cyclopentadienyl₂Ru, Rh(acac)(CO)₂, Ir(pyridin)2(1,5-Cyclooctadien), Cu(Phenyl)Br, Cu(Phenyl)Cl, Cu(Phenyl)I, Cu(PPh3)₂Br, [Cu(CH₃CN)₄]BF₄ und [Cu(CH₃CN)₄]PF₆ oder mehrkernige verbrückte Komplexe wie beispielsweise [Rh(1,5-cyclooctadien)Cl]₂, [Rh(1,5-cyclooctadien)Br]₂, [Rh(Ethen)₂Cl]₂, [Rh(Cycloocten)₂Cl]₂ geeignet.

Bevorzugt werden als Übergangsmetallverbindungen eingesetzt:
[Rh(cod)(acac)] wobei acac für Acetylacetonat steht, [Ir(Ethylen)₂(acac)], [Rh(Ethylen)₂(acac)], [Rh(cod)Cl]₂, [Rh(cod)Br]₂, [Rh(cod)₂]ClO₄, [Rh(cod)₂]BF₄, [Rh(cod)₂]PF₄, [Rh(cod)₂]ClO₆, [Rh(cod)₂]OTf, [Rh(cod)₂]BAr₄ (Ar = 3,5-bistrifluormethylphenyl), [Rh(cod)₂]SbF₆, RuCl₂(cod), [(Cymol)RuCl₂]₂, [(Benzol)RuCl₂]₂, [(Mesityl)RuCl₂]₂, [(Cymol)RuBr₂]₂, [(Cymol)RuI₂]₂, [(Cymol)Ru(BF₄)₂]_{2,} [(Cymol)Ru(PF₆)₂]₂, [(Cymol)Ru(BAr₄)₂]₂ (Ar = 3,5-bistrifluormethylphenyl), [(Cymol)Ru(SbF₆)₂]₂, [Ir(cod)Cl]₂, [Ir(cod)₂]PF₆, [Ir(cod)₂]ClO₄, [Ir(cod)₂]SbF₆, [Ir(cod)₂]BF₄, [Ir(cod)₂]OTf, [Ir(cod)₂]BAr₄ (Ar = 3,5-bistrifluormethylphenyl), RuCl₃, NiCl₃, RhCl₃, PdCl₂, PdBr₂, Pd(OAc)2, Pd₂(dibenzylidenaceton)₃, Pd(acetylacetonat)₂, CuOTf, CuI, CuCl, Cu(OTf)₂, CuBr, CuI, CuBr₂, CuCl₂, CuI₂, [Rh(nbd)Cl]₂, [Rh(nbd)Br]_{z}, [Rh(nbd)₂]ClO₄, [Rh(nbd)₂]BF₄, [Rh(nbd)₂]PF₆, [Rh(nbd)₂]OTf, [Rh(nbd)₂]BAr₄ (Ar = 3,5-bistrifluormethylphenyl), [Rh(nbd)₂]SbF₆, RuCl₂(nbd), [Ir(nbd)₂]PF₆, [Ir(nbd)₂]ClO₄, [Ir(nbd)₂]SbF₆, [Ir(nbd)₂]BF₄, [Ir(nbd)₂]OTf, [Ir(nbd)₂]BAr₄ (Ar = 3,5-bistrifluormethylphenyl), Ir(pyridin)₂(nbd), [Ru(DMSO)₄Cl₂], [Ru(CH₃CN)₄Cl₂], [Ru(PhCN)₄Cl₂], [Ru(cod)Cl₂]ₙ, [Ru(cod)₄(Methallyl)₂], [Ru(acetylacetonat)₃]

Die Menge der eingesetzten Übergangsmetallverbindungen kann beispielsweise 25 bis 200 mol% bezogen auf die eingesetzte Verbindung der (I) betragen, bevorzugt sind 50 bis 150 mol-%, ganz besonders bevorzugt 75 bis 125 mol-% und noch weiter bevorzugt 100 bis 125 mol-% .

Die Katalysatoren, die die erfindungsgemäßen Übergangsmetallkomplexe enthalten eignen sich insbesondere für den Einsatz in einem Verfahren zur Herstellung von stereoisomerenangereicherten, bevorzugt enantiomerenangereicherten Verbindungen.

Bevorzugt werden die Katalysatoren für asymmetrische 1,4-Additionen, asymmetrische Hydroformylierungen, asymmetrische allylische Substitutionen asymmetrische Hydrocyanierungen, asymmetrische Heck-Reaktionen, asymmetrische Hydroborierungen und asymmetrische Hydrogenierungen eingesetzt, besonders bevorzugt für asymmetrische Hydrogenierungen, asymmetrische 1,4-Additionen, asymmetrische Hydroborierungen und asymmetrische allylische Substitutionen.

Bevorzugte asymmetrische Hydrogenierungen sind beispielsweise Hydrogenierungen von prochiralen C=C-Bindungen wie zum Beispiel von prochirale Enaminen, Enamiden, Olefinen, Enolethern, C=O-Bindungen wie zum Beispiel von prochirale Ketonen und C=N-Bindungen wie zum Beispiel von prochiralen Iminen. Besonders bevorzugte asymmetrische Hydrogenierungen sind Hydrogenierungen von prochiralen C=C-Bindungen wie zum Beispiel von prochiralen Enaminen und Enamiden, Olefinen.

Von der Erfindung ist daher auch ein Verfahren zur Herstellung von stereoisomerenangereicherten, bevorzugt enantiomerenangereicherten Verbindungen durch katalytische Hydrierung von Olefinen, Enaminen, Enamiden, Iminen oder Ketonen umfasst, das dadurch gekennzeichnet ist, dass als Katalysatoren solche verwendet werden, die Übergangsmetallkomplexe von Verbindungen der Formel (I) mit der dort angegebenen Bedeutung verwendet werden.

Die Menge der eingesetzten Übergangsmetallverbindung oder des eingesetzten Übergangsmetallkomplexes kann beispielsweise 0.001 bis 5 mol-% bezogen auf das eingesetzte Substrat betragen, bevorzugt sind 0.001 bis 0,5 mol-%, ganz besonders bevorzugt 0.001 bis 0,1 mol-% und noch weiter bevorzugt 0,001 bis 0,008 mol-% .

In einer bevorzugten Ausführungsform können asymmetrische Hydrogenierungen, 1,4-Additionen und Hydroborierungen beispielsweise so durchgeführt werden, dass der Katalysator aus einer Übergangsmetallverbindung und Verbindung der Formel (I) gegebenenfalls in einem geeigneten Lösungsmittel erzeugt wird, das Substrat zugegeben wird und die Reaktionsmischung bei Reaktionstemperatur mit dem Reaktanden versetzt wird (Wasserstoff, Boronsäuren, Boranen etc.)

Als Lösungsmittel für die asymmetrische Katalyse eignen sich beispielsweise chlorierte Alkane wie Methylchlorid, kurzkettige C₁-C₆-Alkohole wie z.B. Methanol, iso-Propanol oder Ethanol, aromatische Kohlenwasserstoffe wie z.B. Toluol oder Benzol, Ketone wie z.B. Aceton oder Carbonsäureester wie z.B. Ethylacetat.

Die asymmetrische Katalyse wird vorteilhaft bei einer Temperatur von -20°C bis 200°C, bevorzugt 0 bis 100°C und besonders bevorzugt bei 20° bis 70°C durchgeführt.

Die erfindungsgemäßen Katalysatoren eignen sich insbesondere in einem Verfahren zur Herstellung von stereoisomerenangereicherten, bevorzugt enantiomerenangereicherten Wirkstoffen in Arzneimitteln und Agrochemikalien, oder Zwischenprodukten dieser beiden Klassen.

Der Vorteil der vorliegenden Erfindung ist, dass die Verbindungen der Formel (I) in effizienter Weise hergestellt werden können und deren elektronische und sterische Eigenschaften ausgehend von einfach verfügbaren Edukten in weitem Masse variabel sind. Weiterhin zeigen die erfindungsgemäßen Liganden und deren Übergangsmetallkomplexe eine gute Performance in asymmetrischen Synthesen.

### Beispiele:

### Allgemeine Hinweise:

Alle Reaktionen mit Luft- oder Feuchtigkeitsempfindlichen Verbindungen wurden unter Argonatmosphäre unter Benutzung von Schlenk Technik durchgeführt. Die Lösungsmittel wurden über geeigneten Reagenzien getrocknet und unter Stickstoffatmosphäre destilliert. In einigen Fällen wurden die Lösungsmittel vorher am Rotationsverdampfer destilliert. Kommerziell erhältliche Reagenzien wurden, wenn nicht besonders erwähnt, ohne weitere Reinigung eingesetzt. Das im Text genannte Kieselgel ist Kieselgel 60 (Merck 0.04-0.063 mm, 230-400 mesh), alumina ist Aluminiumoxid (Fluka, mit Wasser behandelt, um III Brockmann grade zu erreichen), Celite ist Kieselgur (Merck). Das Ölpumpenvakuum entspricht ungefähr 0.2 mbar. Die Reaktionstemperaturen beziehen sich auf Innentemperaturen

### Allgemeine Arbeitsvorschrift 1 zur Umsetzung von Phosphinoxiden zu den korrespondieren Phosphan-Boran-Komplexen

Unter Argonatmosphäre wurden 20 ml wasserfreies Toluol, 2 ml Polymethylhydrosiloxan (Aldrich) und 1,5ml Titanisopropoxid (Acros) in einen getrockneten Schlenk Kolben gegeben. Eine Probe des Reaktionsgemisches wurde in ein NMR Röhrchen gegeben, um die Reaktion zu verfolgen. Das Reaktionsgemisch und das Röhrchen wurden 2-4h bei 105 °C erwärmt, bis im ³¹P-NMR vollständige Reduktion festgestellt wurde (Oxid bei 30-40 ppm, Phosphine bei -20-0 ppm). Das Reaktionsgemisch wird abkühlen gelassen und 1 ml Borandimethylsulfid-Komplex (Aldrich) wird zugegeben. Nach einigen Minuten wird das Gemisch in einen 250 ml Erlenmeyerkolben mit 5 ml Methanol gegeben (Wasserstoffentwicklung !). Nach dem Abklingen der Gasentwicklung wird die Lösung in eine Nalgene® Flasche mit 20 ml 48% HF und 20 ml Wasser gegeben und 12 h bei Raumtemperatur gerührt. (Dadurch wird der Überschuss PMHS entfernt, der sonst schwer abzutrennen ist). Die organische Phase wird abgetrennt und die wässrige Phase mit 15 ml Toluol extrahiert. Die vereinigten organischen Phasen werden mit gesättigter Natriumhydrogencarbonatlösung und Brine gewaschen, über Magnesiumsulfat getrocknet und das Lösungsmittel im Vakuum entfernt. Der Rückstand wird in einer kleinen Menge Diethylether aufgelöst und durch eine 3 cm hohe Schicht Kieselgel filtriert, diese mit Diethylether gewaschen, das Lösungsmittel wird entfernt und die Substanz im Vakuum getrocknet, um den Phosphinborankomplex als viskoses Öl erhalten, das allmählich fest wird. Typischer Ausbeutebereich 95-99 %.

### Allgemeine Arbeitsvorschrift 2 zur Umsetzung von Phosphan-Boran-Alkoholen zu den entsprechenden Mesylaten und nukleophile Substitution mit Diphenylphosphin.

Unter Argonatmosphäre wurden in ein 100 ml trockenes Schlenk-Gefäss 5 mM eines PhosphinBoran Alkohols und 40 ml trockenes Dichlormethan gegeben. Die Mischung wurde auf -30°C gekühlt und 2.4 ml wasserfreies Triethylamin zugegeben.

Dann wurden 1.2 ml Methansulfonylchlorid tropfenweise unter starkem Rühren bei dieser Temperatur zugegeben. Das Reaktionsgemisch wurde 2 h bei -30° belassen und bei dieser Temperatur unter Rühren in 200 ml wasserfreien Diethylether gegeben. Nach 5 min wurde der weiße Niederschlag durch eine 3cm hohe Silicagel-Schicht abfiltriert. Der Filterkuchen wurde mit 100 ml Diethylether gewaschen und das Lösungsmittel im Vakuum bis auf einen Rückstand von 10 ml entfernt. Das restliche Lösungsmittel wurde im Hochvakuum entfernt, um thermische Belastung zu vermeiden. Der verbleibende Rückstand wurde 5h im Hochvakuum belassen, um Reste von MsCl zu entfernen. Das so erhaltene Mesylat wurde ohne weitere Reinigung in den nächsten Schritt eingesetzt.

In einem 100 ml Schlenk-Gefäss unter Argonatmosphäre wurden 2.00 g t-BuOK in 25 ml wasserfreiem THF und 2.32 g (3 Äquivalente) Diphenylphosphin (Strem) zusammengegeben. Die orangefarbene Lösung wurde auf -20°C gekühlt und das oben beschriebene Mesylat in 10 ml THF langsam zugegeben. Das Reaktionsgemisch wurde auf Raumtemperatur erwärmen gelassen und dann 18 h auf 50°C erhitzt. Nach dem Abkühlen auf Raumtemperatur wurden 2.5 ml Boran-Dimethylsulfid Komplex (Aldrich) zugegeben. Der Inhalt des Reaktionsgefässes wurde vorsichtig in einen 250 ml Erlenmeyerkolben mit 10 ml Methanol gegeben. Nach dem Abklingen der Gasentwicklung wurden 50 ml gesättigte NH₄Cl Lösung zugegeben, die organische Phase abgetrennt und die wässrige Phase zweimal mit je 20 ml Dichlormethan extrahiert. Die vereinigten organischen Phasen wurden mit gesättigter Kochsalzlösung gewaschen, über Magnesiumsulfat getrocknet und das Lösungsmittel im Vakuum entfernt. Der Rückstand wurde in 5 ml Dichlormethan-Pentan (1:1) gelöst und durch eine 5 cm hohe Aluminiumoxid-Schicht auf einem 25 mm (Durchmesser) Filter filtriert. Der Großteil des Lösungsmittels wurde im Vakuum entfernt und der Rückstand mit 15 ml Diethylether verdünnt und 12 h bei 0°C belassen. Der gebildete Feststoff wurde abfiltriert und im Vakuum getrocknet.

**Allgemeine Arbeitsvorschrift 3** zur Deprotektion eines Phosphin-Borans mit N,N'-Bis-(3-aminopropyl)-piperazin.

Phosphinboran (1 mM) wurde unter Argonatmosphäre in ein 10 ml Schlenk Gefäss gegeben und in 2 ml wasserfreiem Toluol gelöst. Zu dieser Lösung wurde 1 ml N,N'-Bis-(3-aminopropyl)piperazin (Lancaster) gegeben. Das Reaktionsgemisch wurde 2 h auf 105°C erhitzt, auf Raumtemperatur gekühlt und mit 10 ml Diethylether verdünnt. Unter Argonatmosphäre wurde das Gemisch durch mit Diethylether angefeuchtetes Silicagel in einen Kolben filtriert (strengster Sauerstoffausschluss). Das Silicagel wurde zweimal mit je 30 ml Diethylether nachgewaschen. Das Lösungsmittel wurde im Vakuum entfernt. Das resultierende Phosphin wird als weißer Schaum oder hochviskoses Öl erhalten, das sich verfestigt. Das Produkt wurde unter Argonatmosphäre gelagert.

**Allgemeine Arbeitsvorschrift 4** zur Hydrierung eines Phosphinoxids über Raney-Nickel.

6.0 g Raney Nickel (50% wasserfeucht, Acros) wurde durch dreimaliges Mischen und Abdekantieren mit 20 ml Einheiten Methanol gewaschen, mit 30 ml Methanol und in einen 200 ml V4A-Autoklaven transferiert. 8mM Diphenylphosphinoxid wurden zugegeben und der Autoklav mit Wasserstoff bis zum Erreichen von 50 bar beschickt. Die Hydrierung erfolgte bei 50°C über einen Zeitraum von 48 h, der Autoklav wurde entspannt und das Gemisch durch eine Schicht Celite filtriert. Der Rückstand wurde mit Methanol gewaschen. Das Lösungsmittel des Filtrates wurde im Vakuum entfernt und das Produkt wurde als farbloser Schaum in nahezu quantitativer Ausbeute erhalten.

### Beispiel 1

**Herstellung von** ((2S,3S)- 3-Diphenylphosphanyl-2-[(diphenylphosphanyl)-methyl]-6,6-dimethylbicyclo[3.1.1]heptan

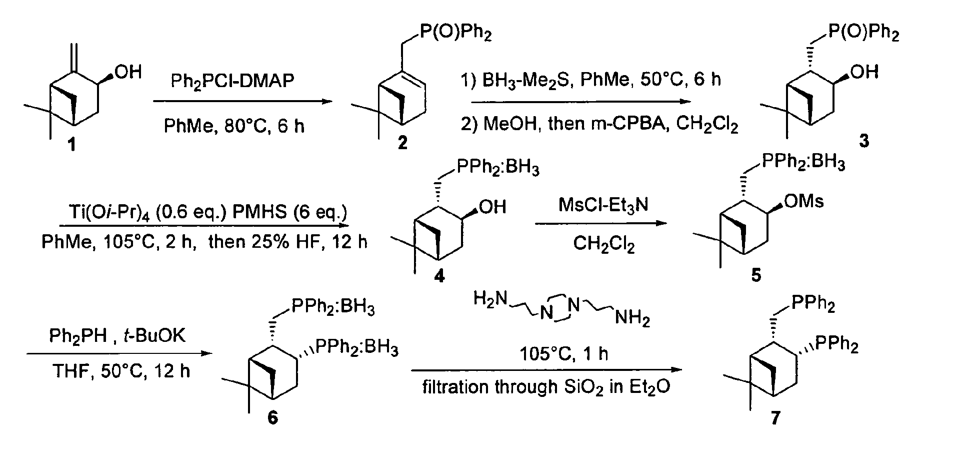

### 1a) (2S,3R)-2-(Diphenyl-phosphinoylmethyl)-6,6-dimethyl-bicyclo[3.1.1]heptan-3-ol(3).

*Trans*-pinocarveol wurde erhalten wie in *Organic Syntheses, Coll. Vol. VI, p. 947* beschrieben.

10.2 g (84 mmol) 4-Dimethylaminopyridin (Acros) wurden in einen 250 ml Schlenk Kolben gegeben und unter Argonatmosphäre in 100 ml wasserfreiem Toluol gelöst. *Trans*-pinocarveol (12,7 g, 84 mmol) wurde zugegeben, das Reaktionsgemisch auf -30°C gekühlt und bei dieser Temperatur 15.2 ml (84 mmol) Diphenylchlorophosphine (Strem 98 %, vor Gebrauch im Vakuum destilliert) tropfenweise während 5 min zugegeben. Das Reaktionsgemisch wurde auf Raumtemperatur erwärmt und dann 6h bei 80°C erhitzt. ³¹P-NMR zeigte vollständige UmlagerungDiphenylphosphinit 126 ppm, Diphenylphosphinoxid 29 ppm). Das Reaktionsgemisch wurde heiss durch eine Celiteschicht filtriertund der Filterkuchen mit Toluol gewaschen. Das Filtrat wurde auf ca. 70 ml aufkonzentriert und dann 2 ml (120 mmol) Borandimethylsulfidkomplex (Aldrich) vorsichtig zugegeben..Das Reaktionsgemisch wurde 6h auf 50°C erhitzt, abgekühlt und der Inhalt vorsichtig in einen 1 L Erlenmeyerkolben mit 70 ml Methanol gegeben. Nach 4 h wurde die Lösung im Vakuum eingeengt und der Rückstand in 80 ml Dichlormethan aufgenommen.

25 g *meta*-Chloroperbenzoesäure (70-75%, Acros) wurden in 200 ml Dichloromethan gelöst, die Lösung über Magnesiumsulfat getrocknet und in einen 500 ml Zweihalskolben mit Tropftrichter und Thermometer gegeben. Der Kolben wurde in eine Kühlmischung aus Aceton und Trockeneis gehängt und die Lösung des hydroborierten Phosphinoxids tropfenweise so zugegeben, dass die Temperatur nicht über 15°C stieg. Nach beendeter Zugabe wurde das Reaktionsgemisch noch 1 h gerührt und dann filtriert Das Filtrat wurde mit einer Lösung aus 80g Na₂S₂O₅ in 200 ml H₂O 10 min gerührt, die Phasen wurden getrennt und die organische Phase wurde zweimal mit je 00 ml 2M NaOH und Brine gewaschen,, über Magnesiumsulfat getrocknet und das Lösungsmittel im Vakuum entfernt. Der wachsartige Rückstand wurde 24 h in 200 ml Diethylether aufgerührt, der gebildete Niederschlag abfiltriert, mit Diethylether gewaschen und im Vakuum getrocknet.

Ausbeute: 18.4 g (62 %).

^{**1**}**H-NMR:** 7.71-7.63 (m, 4H), 7.50-7.36 (m, 6H), 5.56 (bs, 1H), 4.34-4.24 (m, 1H), 3.64 (bs, 1H), 2.56-2.38 (m, 2H),2.29-2.13 (m, 2H), 1.94-1.86 (m, 1H), 1.14 (s,3H), 0.99 (s, 1H), 0.96 (s, 1H), 0.91 (s, 3H).

^{**13**}**C-NMR:** 134.6, 133.2 ,132.7,132.4-132.3 (m), 131.5 (d, J=9.2Hz), 130.8 (d, J=9.2Hz), 129.3(m), 129.1 (m), 70.2, 51.3 (d, J=14.4Hz), 48.3, 41.8, 38.7, 38.0 (d, J=69Hz), 37.0, 34.5, 27.9, 24.2.

^{**31**}**P:** 36.0

**HRMS:** 355.1809 (C₂₂H₂₈O₂P, [M]⁺) **Mp:** 200-200.5°C

### 1b) (2S,3R)-2-(Diphenyl-phosphanylmethyl)-6,6-dimethyl-bicyclo[3.1.1]heptan-3-ol-boran Komplex (4).

Nach der allgemeinen Arbeitsvorschrift 2.1 wurde die Verbindung **3** in das entsprechende Phosphinboran **4**. Farblose, wachsartige Substanz, die während der Lagerung kristallisiert, Ausbeute: 96 %.

^{**1**}**H-NMR:** 7.78-7.62 (m, 4H), 7.56-7.40 (m,6H), 4.20-4.10 (bs, 1H), 2.70-2.40 (m, 1H), 2.48 (bs, 1H), 2.33-2.20 (m, 2H), 1.93 (s, 1H), 1.86 (s, 1H), 1.79 (s, 1H), 1.75 (s, 1H), 1.17 (s, 3H), 1.15 (s, 1H), 1.11 (s, 1H), 0.96 (s, 3H).

^{**13**}**C-NMR:** 132.8 (d, J=8.8Hz), 132.3 (d, J=8.8Hz), 131.8, 131.6, 131.1, 129.3 (d, J=4.7Hz), 129.2 (d, J=4.7Hz), 128.8, 71.1 (d, J= 5.6Hz), 48.5, 48.4, 41.1, 38.1, 33.8, 33.3, 32.5, 27.4, 24.1.

^{**31**}**P:** 15.4 (bs)

**HRMS:** 351.2051 (C₂₂H₂₉BOP, [M-H]⁺)

**Mp:** 107-107.5°C

### 1c) (2S, 3S)-3-Diphenylphosphanyl-2-[(diphenylphosphanyl)-methyl]-6,6-dimethyl-bicyclo[3.1.1]heptane bis-Boran Komplex(6).

Die Verbindung **4** wurde nach der allgemeinen Arbeitsvorschrift 2.2 in das entsprechende Phosphinboran **6** überführt.. Der nach dem Entfernen des Lösungsmittels erhaltene Rückstand wurde zügig in 25 ml Diethylether gelöst. Nach einigen Minuten beginnt die Kristallisation des Produktes. Nach 12 h werden die Kristalle abfiltriert, mit einer kleinen Menge Diethylether gewaschen und im Vakuum getrocknet. Farblose Kristalle, Ausbeute: 55%..

^{**1**}**H-NMR:** 7.93-7.79 (m, 2H), 7.71-7.50 (m, 4H), 7.47-7.21 (m, 8H), 7.22-7.00 (m, 4H), 6.90-6.77 (m, 2H), 3.70-3.45 (m, 1H), 3.26 (bs, 1H), 3.10-2.85 (m, 1H), 2.16-1.90 (m, 1H), 1.80-0.73 (m, 6H) 0.91(s, 3H), 0.87 (s, 3H).

^{**13**}**C-NMR:** 131.5, 131.4, 131.2, 131.1,130.7, 130.4, 130.2, 130.0 (d, J=8.8Hz), 129.8, 129.6 (m) 129.4, 129.3, 129.3, 129.2, 129.0, 128.8, 128.5 (d, J=9.4Hz),128.1, 127.6 (d, J=10.0Hz), 127.3 (d, J=10.0Hz), 44.5, 38.9, 37.2, 33.9, 32.7, 28.1, 27.2 (d, J=10.6Hz), 26.8 (d, J=10.6Hz), 25.6 (d, J=8.5Hz), 19.9.

^{**31**}**P:** 17.5 (bs), 19.0(bs).

**HRMS:** 534.2953 (C₃₄H₄₂B₂P₂, [M]⁺)

**Mp:** 195-196°C

### 1d) (2S, 3S)-3-Diphenylphosphanyl-2-[(diphenylphosphanyl)-methyl]-6,6-dimethyl-bicyclo[3.1.1]heptane (7).

Die Verbindung**6** wurde nach der allgemeinen Arbeitsvorschrift 2.3 in das entsprechende Phosphin **7** überführt. Ausbeute 95%, farbloses, sehr viskoses Öl, das während der Lagerung langsam kristallisiert.

^{**1**}**H-NMR:** 7.49-7.36 (m, 4H), 7.25-7.00 (m, 16H), 6.85-6.78 (m, 2H), 3.24-3.10 (m, 1H), 2.53-2.37 (m, 3H), 2.36-2.32 (m, 1H), 2.10-2.00 (m,1H), 1.76 (bs, 1H), 1.58-1.40 (m, 2H), 1.27 (d, J=10.1Hz, 1H), 1.10 (s, 3H), 0.91 (s,3H).

^{**13**}**C-NMR:** 139.3 (d, J=14.1 Hz), 138.2 (d, J=11.8Hz), 137.4 (d, J=13.5Hz), 137.0 (d, J=14.7Hz) 133.4 (d, J=20.8 Hz), 132.1 (d, J=19.4Hz) 131.4 (d, J=18.5Hz) 127.9-127.0 (m), 124.3, 45.3 (d, J=14.4Hz), 40.1, 37.2, 35.1-34.8 (m), 31.7 (d, J=17.0Hz), 29.8-29.3 (m), 27.2-27.0(m), 26.6, 26.1, 20.0.

^{**31**}**P:** -15.6 (d, J=3.4Hz), -16.2 (d, J=3.4Hz).

**HRMS:** 506.2288 (C₃₄H₃₆P₂, [M]⁺)

### Beispiel 2

Synthesis of *(2R,3R)-* 2-diphenylphosphanyl-3-[(diphenylphosphanyl)-methyl]-bicyclo[3.1.1]heptane

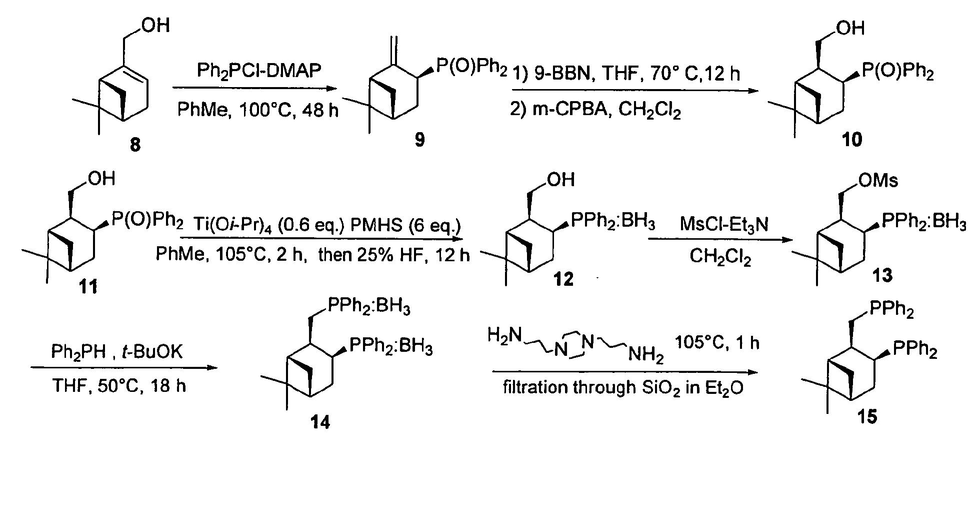

### 1a) (R)-3-(Diphenyl-phosphinoyl)-6,6-dimethyl-2-methylene-bicyclo[3.1.1]heptan (9)

Unter Argonatmosphäre wurden 7.60 g (62 mmol) 4-Dimethylamino pyridin (Acros)in 120 ml Toluolin einen 250 ml Schlenk-Kolben gegeben. (-)-Myrtenol , 9.50 g (62 mmol) (Dragoco, > 99% ee) wurde zugegeben und die Lösung wurde auf-30°C gekühlt. Bei dieser Temperatur wurden 11.2 ml (62 mmol) Diphenylchlorphosphin (Strem 98 %, vor Gebrauch i. Vak. destilliert) tropfenweise während 5 min zugegeben. Das Reaktionsgemisch wurde auf Raumtemperatur erwärmt und dann 48 h auf 100 °C erhitzt.. Die Suspension wurde heiss durch Celite filtriert und der Niederschlag mit 50 ml heissem Toluol gewaschen. Das Lösungsmittel des Filtrates wurde im Vakuum entfernt, der Rückstand abfiltriert und mit Diethylether gewaschen. 20.8 g (90 %)weisses Pulver wurden erhalten.

^{**1**}**H-NMR:** 7.88-7.82 (m, 4H), 7.50-7.43 (m, 6H), 4.56 (d, J=3.4Hz, 1H), 3.91(s, 1H), 3.64 (bs, 1H), 2.41-1.94 (m, 6H), 1.24 (s, 3H), 0.77 (s,3H).

¹³C-NMR: 145.4 d, J=8.5 Hz), 134.5 (d, J=10.0Hz), 133.2 (d, J=13.2Hz), 132.2 (d, J=8.5Hz), 131.7 (m), 131.5(d, J=8.5Hz), 129.1 (d, J=11.2Hz), 128.6 (d, J=11.2Hz), 112.3 (d, J=7.6Hz), 52.0, 41.0, 39.9, 34.9 (d, J=67Hz), 26.9, 26.5, 26.1, 21.7.

^{**31**}**P:** 37.0

**HRMS:** 336.1647 (C₂₂H₂₅OP)

**Mp:** 189.5-190°C

### 2b) (2R,3R)[3-(Diphenyl-phosphinoyl)-6,6-dimethyl-bicyclo[3.1.1]hept-2-yl]-methanol(10)

8.0 g (20 mmol) Phosphinoxid (**9**) wurden unter Argonatmosphäre in 50 ml 0.5 M THF Lösung von 9-BBN (Aldrich) gelöst und das Reaktionsgemisch 12 h in einem verschlossenen Reaktionsgefäss auf 70 °C geheizt.

Eine Lösung von 25 g *meta*-Chloroperbenzoesäure (70-75%, Acros) in 250 ml Dichloromethan, das über MgSO₄ getrocknet wurde, wurde in einen 500 ml Dreihalskolben gegeben. Der Kolben wurde in einem Aceton-Trockeneisbad auf 15°C gekühltund eine Lösundes hydroborierten Phosphinoxids wurde so zugegeben, dass die Temperatur nicht über 20°C stieg. Nach beendeter Zugabe wurde das Reaktionsgemisch 1 h gerührt und dann filtriert. Das Filtrat wurde mit einer Lösung von 80g Na₂S₂O₅ in 200 ml H₂O 10 min gerührt, die Phasen wurden getrennt und die organische Phase zweimal mit je 100 ml 2M NaOH, und Brine gewaschen, über Magnesiumsulfat getrocknet und das Lösungsmittel i. Vak. entfernt. Der wachsartige Rückstand wurde 24 h mit 100 ml Diethylether ausgerührt, der gebildete Niederschlag abfiltriert, mit Diethylether gewaschen und im Vakuum getrcknet. Ausbeute 5.65g (67 %), weisses Pulver.

^{**1**}**H-NMR:** 7.94-7.82 (m, 2H), 7.80-7.67 (m, 2H), 7.50-7.23 (m, 6H), 4.81 (bs, 1H), 3.83 (bs, 1H), 3.52-3.25 (m, 2H), 2.58 (bs,1H), 2.27 (bs, 1H), 2.12-1.90 (m,2H), 1.87-1.65 (m, 3H), 1.19 (s, 3H), 0.98 (s, 3H).

^{**13**}**C-NMR:** 135.9, 134.6, 134.2, 132.9, 132.0, 131.7, 131.1(d, J=8.7Hz), 130.4 (d, J=8.7Hz), 129.5 (d, J=11.0Hz), 129.1 (d, J=11.0Hz), 89.0, 65.4 (d, J=12.0Hz), 46.1, 41.5 (d, J=3.8Hz), 40.0 (d, J=5.0Hz), 39.5, 29.4, 29.0, 28.7, 28.5, 27.0, 21.3.

^{**31**}**P:** 39.1

**HRMS:** 335.1825 (C₂₂H₂₈OP

**Mp:** 185.5-186°C

### 2c) (2R, 3R)[3-(Diphenyl-phosphanyl)-6,6-dimethyl-bicyclo[3.1.1]hept-2 yl]-methanol-BoranKomplex (12).

Die Verbindung **10** wurde nach der allgemeinen Arbeitsvorschrift2.1 in den entsprechenden Phosphinboran Komplex **12** überführt. Ausbeute 95%, farbloses, sehr viskoses Öl.

^{**1**}**H-NMR:** 7.82-7.72 (m, 2H), 7.61-7.52 (m, 2H), 7.41-7.32 (m, 3H), 7.27-7.18 (m, 3H), 3.55-3.35 (m, 2H), 2.61 (bs, 1H), 2.17-2.00(m, 2H), 1.94-1.77 (m,2H), 1.43-0.99 (m, 4H), 1.12 (s, 3H), 0.95 (s,3H).

^{**13**}**C-NMR:** 132.8 (d, J=8.8Hz), 132.3 (d, J=8.8Hz), 131.8, 131.6, 131.1, 129.3 (d, J=4.7 Hz), 129.2 (d, J=4.7Hz), 128.8, 71.1 (d, J= 5.6Hz), 48.5, 48.4, 41.1, 38.1, 33.8, 33.3, 32.5, 27.4, 24.1.

^{**31**}**P:** 21.0 (bs)

**HRMS:** 351.2047 (C₂₂H₂₉BOP, [M-H]⁺)

### 2d) (2R, 3R)-3-Diphenylphosphanyl-2-[(diphenylphosphanyl)-methyl]-6,6-dimethyl-bicyclo[3.1.1]heptan bis-Boran Komplex (14).

Die Verbindung **12** wurde nach der allgeneinen Arbeitsvorschrift 2.2 in das entsprechende Phosphinboran **14** überführt. Nach dem Entfernen des Lösungsmittels am Rotationsverdampfer wurde der Rückstand zügig in 25 ml Diethylether gelöst. Nach einigen Minuten beginnt die Kristallisation des Produktes. Nach 12 h wurden die Kristallle abfiltriert, mit einer kleinen Menge Diethylether gewaschen und im Vakuum getrocknet. Ausbeute 48 %, farblose Kristalle:

^{**1**}**H-NMR:** 7.90-7.80 (m, 2H), 7.62-7.53 (m, 2H), 7.52-7.44 (m, 2H), 7.33-7.09 (m, 10H), 7.10-6.98 (m, 2H), 6.86-6.73 (m, 2H), 3.58-3.35 (m, 1H), 3.13-2.81 (m, 2H), 2.25-2.00 (m, 1H), 1.99-1.86 (m, 1H), 1.77 (bs, 1H), 1.64 (bs, 1H), 1.20 (d, J=10.3Hz), 1.09 (s, 1H), 0.87 (s, 3H), 0.71(s, 1H), 0.50 (s,3H).

^{**13**}**C-NMR:** 133.5 (d, J=9.4 Hz), 133.0, 132.9, 132.8, 132.7, 132.1, 131.8, 131.7, 131.6, 131.3, 131.0, 130.9-130.7 (m), 130.2 (d, J=10.3Hz), 129.9 (d, J=9.7Hz),129.5, 129.1, 129.0, 128.2, 44.2, 40.7 (d, J=8.5Hz), 39.1, 37.4, 29.0, 28.5, 27.9, 27.5, 27.2, 23.0.

^{**31**}**P:** 17.4 (bs), 19.0 (bs)

**HRMS:** 534.2926 (C₃₄H₄₂B₂P₂, [M]⁺)

**Mp**: 195.5-196°C

### 2e) (2R, 3R)-3-Diphenylphosphanyl-2-[(diphenylphosphanyl)-methyl]-6,6-dimethylbicyclo[3.1.1]heptan (15).

Die Verbindung **14** wurde nach der allgemeinen Arbeitsvorschrift 2.3 in das entsprechende Phosphin **15** überführt. Heizzeit 2 h. Ausbeute 96%, farblose, sehr viskose Masse, wird bei der Lagerung langsam fest.

^{**1**}**H-NMR:** 7.55-7.47 (m, 2H), 7.45-7.35 (m, 2H), 7.33-7.23 (m, 2H), 7.22-7.10 (m, 10 H), 7.10-7.00 (m, 2H), 6.84-6.74 (m,2H), 3.22 (t, J=9.1Hz, 1H), 2.65 (t, J=13.1Hz, 1H), 2.54-2.40 (m, 2H), 2.32-2.21 (m, 1H), 2.14-2.03 (m, 1H), 1.82-1.71 (m, 1H), 1.69-1.58 (m, 1H), 1.28 (d, J=9.8 Hz, 1H), 1.08 (s, 3H), 1.04 (s, 3H).

^{**13**}**C-NMR:** 138.8 (d, J=12.9Hz), 137.9 (d, J=12.6Hz), 137.1 (d, J=13.5Hz), 136.7 (d, J=14.7 Hz), 133.3 (d, J=20.8 Hz), 132.1, 131.8, 131.6, 128.1-126.7 (m), 43.6 (d, J=13.5 Hz), 40.1, 38.6-38.3 (m), 38.2, 30.3-29.2 (m), 27.1-26.6 (m), 26.6 (d, J=31.7 Hz), 22.2.

^{**31**}**P:** -15.7 (d, J=3.2 Hz), -16.3 (d, J=3.2 Hz),

**HRMS:** 506.2288 (C₃₄H₃₆P₂, [M]⁺)

### Beispiel 3

### (2S,3S)-2-[(Dicyclohexylphosphanyl)-methyl]-3-diphenylphosphanyl-6,6-di-methylbicyclo[3.1.1]heptane

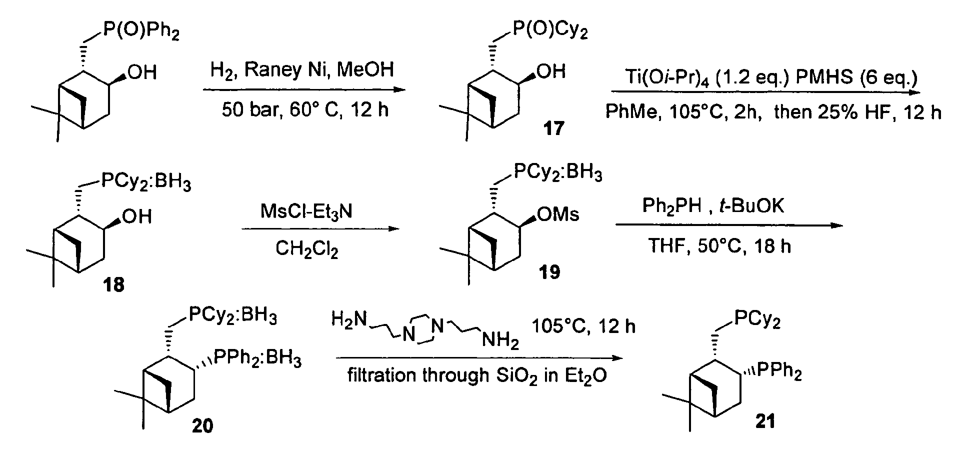

### 3a) (2S,3R)[3-(Dicyclohexyl-phosphinoyl)-6,6-dimethyl-bicyclo[3.1.1]hept-2-yl]-methanol (17)

Nach der allgemeinen Arbeitsvorschrift 2.4 wurde die Verbindung **3** in das Addukt 17 überführt. Ausbeute 97 %, farbloser Feststoff.

^{**1**}**H-NMR:** 5.94 (s,1H), 4.05 (bs, 1H), 2.49-2.19 (m, 3H), 2.08-1.54 (m, 17H), 1.52-1.06 (m, 14H), 1.16 (s,3H), 0.90 (s, 3H).

^{**13**}**C-NMR:** 70.9, 51.0, 50.2, 42.9, 39.8, 38.7, 38.1, 37.7 (d, J=14.7Hz), 36.8, 35.2, 31.7 (d, J=57.5Hz), 28.9, 28.3-26.7 (m), 26.3, 25.3.

^{**31**}**P:** 61.0

**HRMS:** 367.2728 (C₂₂H₄₀PO₂, [M+H]⁺)

**Mp:** 160-161°C

### 3b) (2R, 3R)[3-(Dicyclohexyl-phosphanyl)-6,6-dimethyl-bicyclo[3.1.1]hept-2-yl]-methanol-Boran Komplex (18).

Die Verbindung **17** wurde nach allgemeiner Arbeitsvorschrift 2.1 in den entsprechenden PhosphinBoran Komplex **18** überführt. Ausbeute 93 %, farbloser Feststoff.

^{**1**}**H-NMR:** 4.01-3.92 (m,1H), 2.50-2.08 (m, 4H), 1.97-1.47 (m, 19H), 1.42-1.05 (m, 18H), 0.84 (s, 3H).

^{**13**}**C-NMR:** 69.4, 47.7, 47.4, 39.7, 36.5 (d, J=24.3Hz), 32.1-30.3 (m), 26.6-24.3 (m), 22.8.

^{**31**}**P:** 34 (bs)

**HRMS:** 363.2978 (C₂₂H₄₁BOP, [M-H]⁺)

**Mp**: 103-104°C

### 3c) (2R, 3R)-3-Dicyclohexyl-phosphanyl-2-[(diphenylphosphanyl)-methyl]-6,6-dimethylbicyclo[3.1.1]heptane bis-Boran Komplex(20).

Die Verbindung **18** wurde nach der allgemeinen Arbeitsvorschrift 2.2 in das entsprechende Phosphinboran **20** überführt. Der nach dem Entfernen des Lösungsmittels erhaltene Rückstand wurde zügig in 25 ml Diethylether gelöst. Nach einigen Minuten beginnt die Kristallisation des Produktes. Nach 12 h werden die Kristalle abfiltriert, mit einer kleinen Menge Diethylether gewaschen und im Vakuum getrocknet. Ausbeute 44 %, farblose Kristalle.

^{**1**}**H-NMR:** 7.79-7.69 (m, 4H), 7.48-7.37 (m, 6H), 3.29-3.00 (m, 3H), 2.60-2.45 (m, 1H), 2.28-2.08 (m, 2H), 2.07-1.79 (m, 8H), 1.78-1.56 (m, 6H), 1.55-1.05 (m, 18H), 1.02 (s, 3H), 1.00 (s, 3H).

^{**13**}**C-NMR:** 132.5 (d, J=9.4Hz), 132.2, 132.0 (d, J=8.8Hz), 131.5, 131.2, 131.0, 130.3, 129.1 (d, J=10.0Hz), 128.9 (d, J=10.0Hz), 46.9, 40.8, 38.4, 35.9, 34.6(d, J=30.8Hz), 33.9(d, J=27.8Hz), 30.2, 29.7, 29.4, 29.2, 28.8, 28.4-27.5 (m), 26.4 (d, J=22.0Hz), 24.6-24.0 (m), 21.5.

^{**31**}**P:** 16.0 (bs), 33.5 (bs).

**HRMS:** 531.3499(C₃₄H₅₀BP₂, [M-BH₄]⁺)

**Mp**: 228-229°C

### 3d) (2R, 3R)-3-Diphenylphosphanyl-2-[(diphenylphosphanyl)-methyl]-6,6-dimethylbicyclo[3.1.1]heptan (21).

Die Verbindung **20** wurde nach der allgemeinen Arbeitsvorschrift 2.3 in das entsprechende Phosphin **21** überführt.. Reaktionszeit 12 h. Ausbeute 96 %, farbloses, sehr viskoses Öl.

^{**1**}**H-NMR:** 7.42-7.32 (m, 4H), 7.26-7.17 (m, 6H), 2.73-2.60 (m, 3H), 2.49-2.20 (m, 7H), 2.07-1.37 (m,16H), 1.29-0.98 (m, 15H), 0.94 (s, 3H).

^{**13**}**C-NMR:** 138.4(d, J=11.5Hz), 137.8 (d, J=14.1Hz), 132.4 (d, J=19.1Hz), 131.8 (d, J=18.2Hz), 127.5, 127.4-126.8 (m), 55.5, 52.4, 46.3, 40.4, 39.9, 37.2, 36.4, 32.7-30.3 (m), 29.6, 29.3, 28.2, 27.7, 27.4-26.3 (m), 25.5 (d, J=23.8Hz), 24.4-23.7 (m), 20.3.

^{**31**}**P:** -3.8 (s), -17.5(s).

### Beispiel 4

Synthesis of (2*R*,3*R*)-3-Dicyclohexylphosphanyl-2-[(diphenylphosphanyl)-methyl]-6,6-dimethylbicyclo[3.1.1]heptane

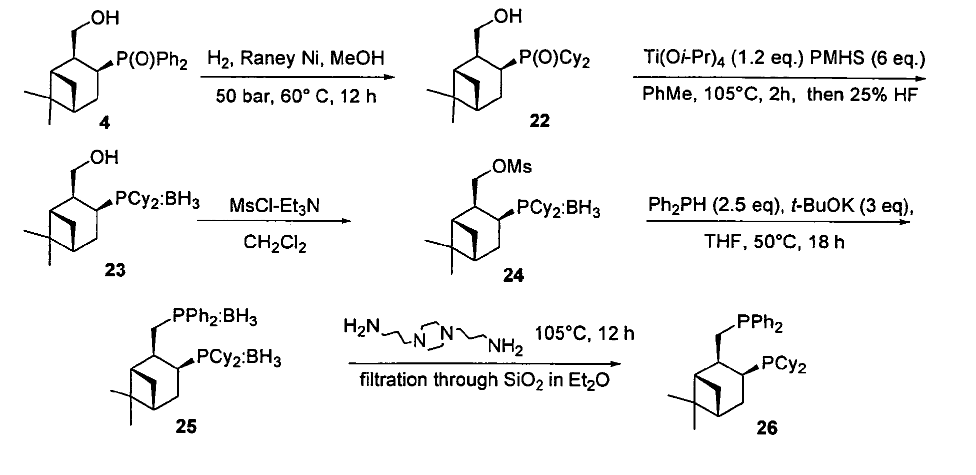

### Beispiel 5

### (2R,3R)[3-(Dicyclohexyl-phosphinoyl)-6,6-dimethyl-bicyclo[3.1.1]hept-2-yl]-methanol (22).

Nach der allgemeinen Arbeitsvorschrift 2.4 wurde die Verbindung **4** in das Addukt **22** überführt. **Ausbeute** 98 %, weisser Schaum.

^{**1**}**H-NMR:** 6.05 (bs, 1H), 3.92 (bs, 1H), 3.66-3.48 (m, 1H), 3.00-2.78 (m, 1H), 2.59 (bs, 1H), 2.31-1.05 (m, 36H), 0.94 (s, 3H).

^{**13**}**C-NMR:** 65.8, 46.3, 42.7, 39.7, 39.1, 37.8, 37.0, 35.6, 34.8, 28.3, 27.3, 27.2-24.9 (m), 20.5.

^{**31**}**P:** 62.0.

**HRMS:** 367.2767 (C₂₂H₄₀PO₂, [M+H]⁺)

### 6.2. (2R,3R)[3-(Dicyclohexyl)-6, 6-dimethyl-bicyclo[3.1.1]hept-2-yl]-methanol-Boran Komplex (12).

Die Verbindung **22** wurde nach der allgemeinen Arbeitsvorschrift 2.1 in den entsprechenden Phosphinboran Komplex **23** überführt. Ausbeute 94 %, farbloses, sehr viskoses Öl.

^{**1**}**H-NMR:** 4.01-3.92 (m, 1H), 3.80-3.70 (m, 1H), 3.00-2.80 (m, 1H), 2.55-2.37 (m, 1H), 2.31-1.06 (m, 33H), 1.01 (s, 3H).

^{**13**}**C-NMR:** 63.3, 49.3, 43.5, 41.3, 40.0, 37.1, 33.2, 32.8, 32.4, 28.8, 28.0, 27.7, 27.2-27.0 (m), 25.2, 21.3,21.0,20.4.

^{**31**}**P:** 17.2 (bs)

**HRMS:** 363.3014 (C₂₂H₄₁BOP, [M-H]⁺)

### 5c) (2R, 3R)-3-Dicyclohexyl-2-[(diphenylphosphanyl)-methyl]-6,6-dimethyl-bicyclo-[3.1.1]heptane bis-Boran Komplex(25).

Die Verbindung **23** wurde nach der allgemeinen Arbeitsvorschrift 2.2 in das entsprechende Bis-Phosphinboran **25** überführt. Der nach dem Entfernen des Lösungsmittels erhaltene Rückstand wurde in 10 ml Dichloromethan gelöst. 50 ml Methanol wurden zugegeben und die Lösung am Rotationsverdampfer auf die Hälfte eingeengt. Die Suspension wurde bei 0°C im Kühlschrank gelagert. Nach 12h wurden die gebildeten Kristalle abfiltriert, mit einer kleinen Menge Diethylether gewaschen und im Vakuum getrocknet. Ausbeute 48%, farblose Kristalle.

^{**1**}**H-NMR:** 7.98-7.88 (m,2H), 7.68-7.58 (m, 2H), 7.51-7.42 (m, 3H), 7.35-7.23 (m, 3H), 3.68-3.42 (m, 1H), 3.09-2.91 (m, 1H), 2.43-2.14 (m, 4H), 1.91-0.57 (m, 31H), 0.53-0.29 (m, 1H).

^{**13**}**C-NMR:** 132.7 (d, J=8.3Hz), 131.9, 131.2, 131.1, 130.4, 129.9 (d, J=9.6Hz), 129.7, 129.0, 129.0(d, J=9.6Hz), 44.8, 41.0, 39.3, 37.4, 34.7 (d, J=32.0Hz), 32.7 (d, J=32.0Hz), 28.2-25.8 (m), 23.4, 22.0-21.3(m).

^{**31**}**P:** 16.8 (bs), 28.7(bs).

**HRMS:** 531.3467(C₃₄H₅₀BP₂, [M-BH₄]⁺).

**Mp**: 228-9°C

### 5d) (2R,3R)-3-Diphenylphosphanyl-2-[(diphenylphosphanyl)-methyl]-6,6-dimethylbicyclo[3.1.1]heptan (26).

Die Verbindung **25** wurde nach der allgemeinen Arbeitsvorschrift 2.3 in das entsprechende Phosphin **26** überführt. Reaktionszeit 12 h. Ausbeute 95%, farbloses, sehr viskoses Produkt.

^{**1**}**H-NMR:** 7.64-7.52 (m, 2H), 7.47-7.35 (m, 2H), 7.35-7.21 (m, 3H), 7.20-7.10 (m, 3H), 3.40-3.20 (m, 1H), 2.60-2.23 (m, 3H), 2.22-2.08 (m, 1H), 1.98-1.81 (m, 1H), 1.80-0.46 (m, 32H).

^{**13**}**C-NMR:** 138.8 (d, J=12.3Hz), 137.4 (d, J=13.8Hz), 133.3 (d, J=20.8Hz), 131.7 (d, J=18.8Hz), 128.2-126.8 (m), 43.4 (d, J=12.3Hz), 40.8-39.7 (m), 38.0, 32.8-32.1 (m), 29.7 (d, J=17.6 Hz), 29.0 (d, J=12.3Hz), 28.9-28.4 (m), 28.0 (d, J=10.3Hz), 27.1, 27.0-26.0 (m), 25.4 (d, J=17.0Hz).

^{**31**}**P:** -3.4(s), - 17.4(s).

Für nachstehende Beispiele werden die Liganden der Formel (I) verwendet und wie folgt abgekürzt:

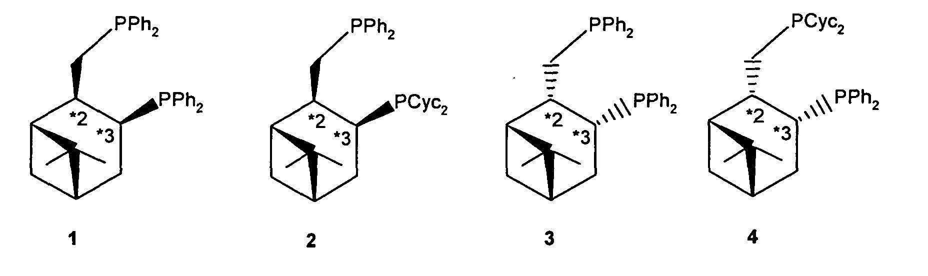

### Beispiele 6 bis 9:

Rhodium-katalysierte asymmetrische Hydrierung von (Z)-α-Acetamidozimtsäure methylester

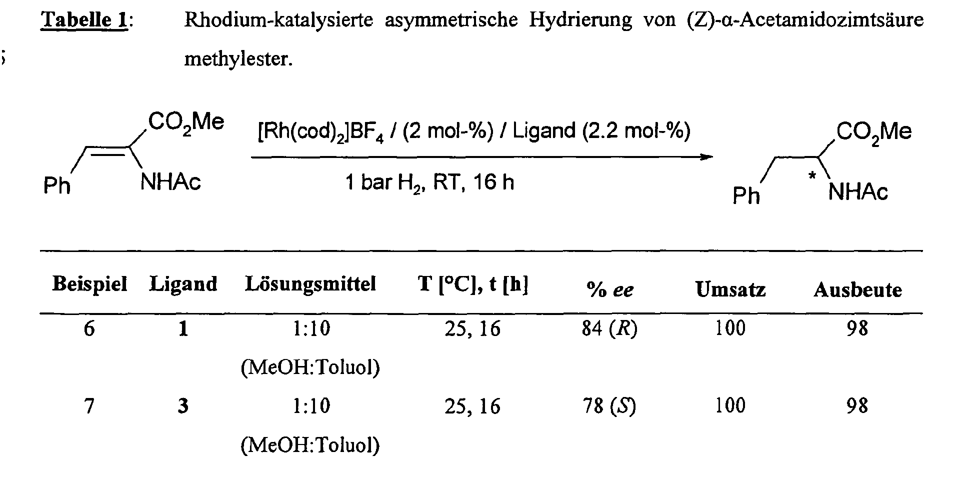

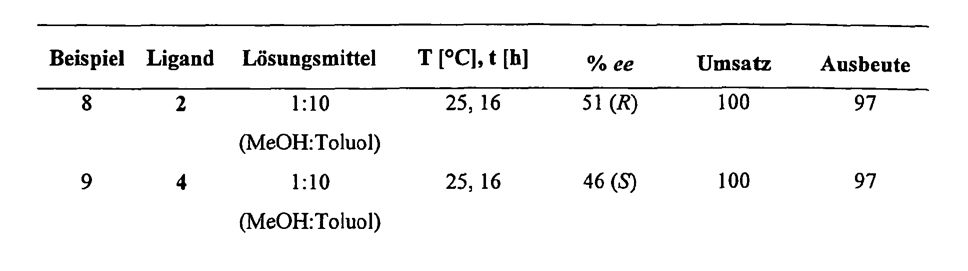

### Beispiele 10 bis 13:

Rhodium-katalysierte asymmetrische Hydrierung von α-Acetamidoacrylsäuremethylester

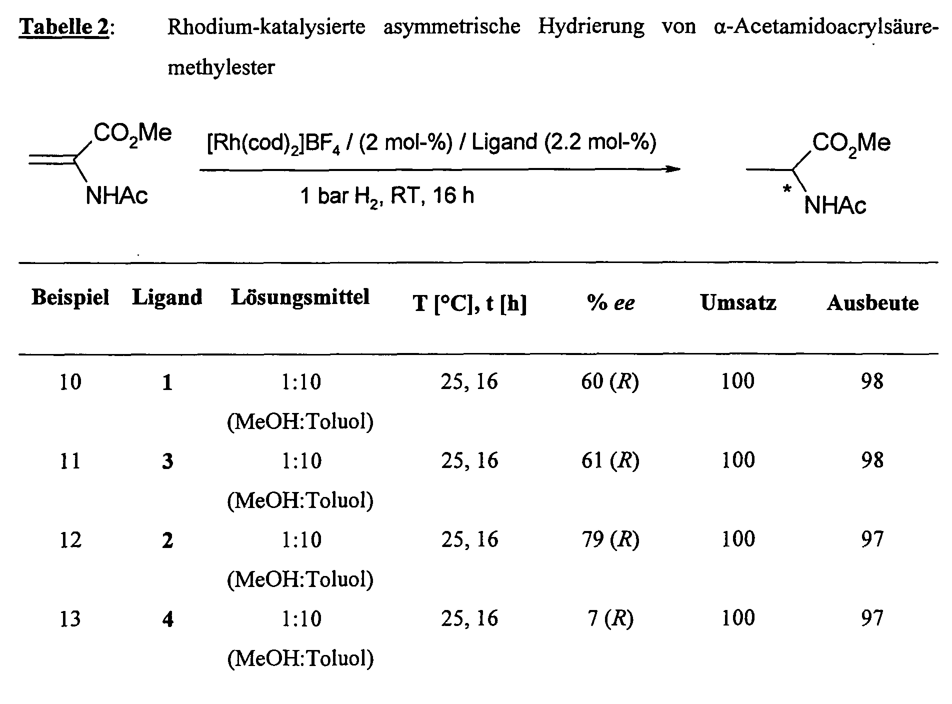

### Beispiele 14 und 15:

Rhodium-katalysierte asymmetrische Hydrierung von Dimethylitaconat

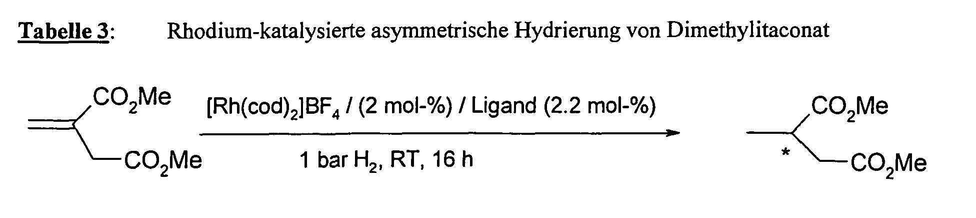

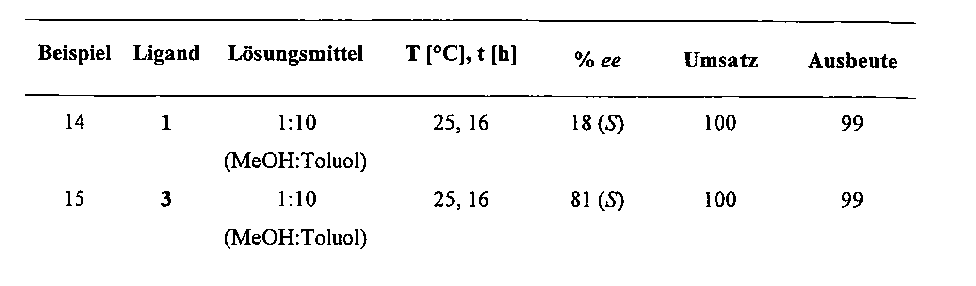

### Beispiel 16:

Rhodium-katalysierte asymmetrische Hydrierung von Acetophenon-Phenylcarbonylhyrazon

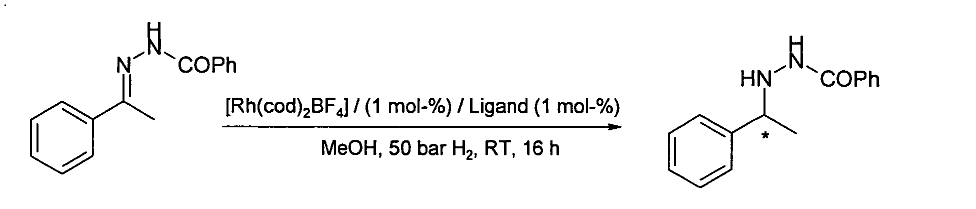

| | | | | |
|---|---|---|---|---|
| **Beispiel** | **Ligand** | **%** ***ee*** | **Umsatz** | **Ausbeute** |
| 16 | 1 | 30 (*R*) | 100 | 88 |

### Beispiel 17:

Ruthenium-katalysierte asymmetrische Hydrierung von 3-Phenyl-3-oxopropansäureethylester

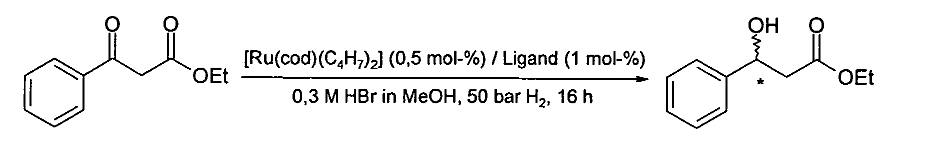

| | | | | |
|---|---|---|---|---|
| **Beispiel** | **Ligand** | **% ee** | **Umsatz** | **Ausbeute** |
| 17 | 3 | 37 (*R*) | 100 | 98 |

### Beispiel 18:

Palladium-katalysierte asymmetrische allylische Substitution von 1,3-Diphenylallylacetat mit Malonsäuremethylester

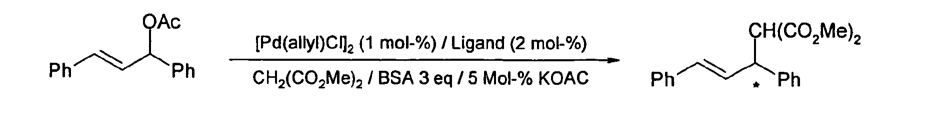

| | | | | |
|---|---|---|---|---|
| **Beispiel** | **Ligand** | **% *ee*** | **Umsatz** | **Ausbeute** |
| 18 | 1 | 33 (*S*) | 100 | 78 |

## Patentansprüche

1. Verbindungen der Formel (I), 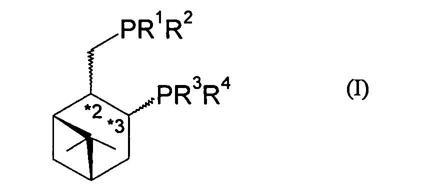 in der
• *2 und *3 jeweils ein stereogenes Kohlenstoffatom markieren, das in R- oder S-Konfiguration vorliegt, wobei die Substituenten jedoch bezogen auf die verbindende Kohlenstoffbindung cisoid angeordnet sind und
• R¹, R², R³ und R⁴ jeweils unabhängig voneinander stehen können für: Alkyl, Arylalkyl oder Aryl oder einen heterocyclischen Rest mit insgesamt 4 bis 16 Kohlenstoffatomen oder R¹ und R² und/oder R³ und R⁴ jeweils zusammen für Alkylen stehen.

2. Verbindungen nach Anspruch 1, **dadurch gekennzeichnet, dass** die Verbindungen der Formel (I) enantiomerenangereichert sind.

3. Verbindungen nach Anspruch 1 oder 2, **dadurch gekennzeichnet, dass** in der Formel (I) R¹ und R² bzw. R³ und R⁴ jeweils paarweise identisch für: Alkyl oder Aryl oder einen heterocyclischen Rest mit insgesamt 4 bis 9 Kohlenstoffatomen oder jeweils zusammen für Alkylen stehen.

4. Folgende Verbindungen nach Anspruch 1, 2 oder 3: (2S,3S)- 3-Diphenylphosphanyl-2-[(diphenylphosphanyl)-methyl]-6,6-dimethyl-bicyclo[3.1.1]heptan, (2R,3R)- 3-Diphenylphosphanyl-2-[(diphenylphosphanyl)-methyl]-6,6-dimethyl-bicyclo[3.1.1]heptan, (2R,3R)-3-Diphenylphosphanyl-2-[(diphenylphosphanyl)-methyl]-6,6-dimethyl-bicyclo[3.1.1]heptan und (2R,3R)- 3-Diphenylphosphanyl-2-[(diphenylphosphanyl)-methyl]-6,6-dimethylbicyclo[3.1.1]heptan.

5. Verbindungen umfassend Verbindungen nach Anspruch 1, 2, 3 oder 4 und Borane.

6. Verfahren zur Herstellung von Verbindungen nach den Ansprüchen 1 bis 5 oder 6, **dadurch gekennzeichnet, dass**
• in einem Schritt A) Verbindungen der Formel (IIa) oder (IIb) 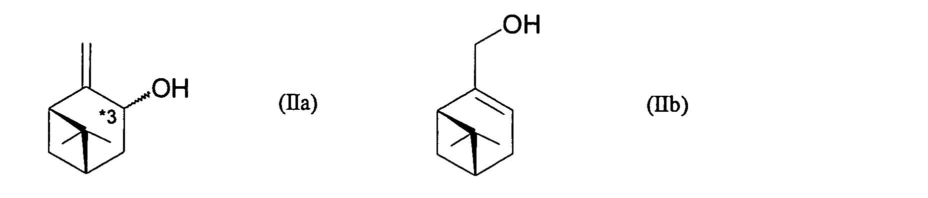 in der *3 die für Formel (I) genannten Bedeutungen und Vorzugsbereiche besitzen mit Verbindungen der Formel (IIIa) bzw. (IIIb)
Hal-PR¹R² (IIIa)
Hal-PR³R⁴ (IIIb)
zu Verbindungen der Formel (IVa) und (IVb) umgesetzt werden 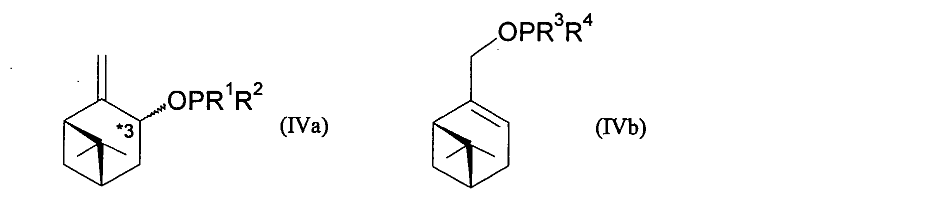 und
• in einem Schritt B) die Verbindungen der Formel (IVa) und (IVb) gegebenenfalls in einem organischen Lösungsmittel durch Erhitzen auf mindestens 60°C in Verbindungen der Formel (Va) und (Vb) überführt werden 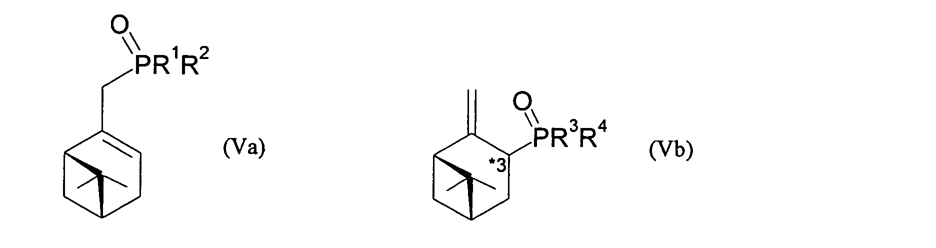
• und in einem Schritt C) die Verbindungen der Formel (Va) und (Vb) durch Umsetzung mit einem Boran und anschließende Oxidation in Verbindungen der Formel (VIa) und (VIb) überführt werden 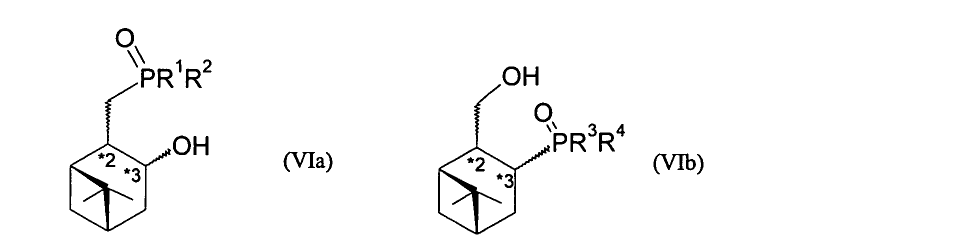
• und in einem Schritt D) die Verbindungen der Formel (VIa) und (VIb) durch Reduktion in Verbindungen der Formel (VIIa) und (VIIb) überführt werden 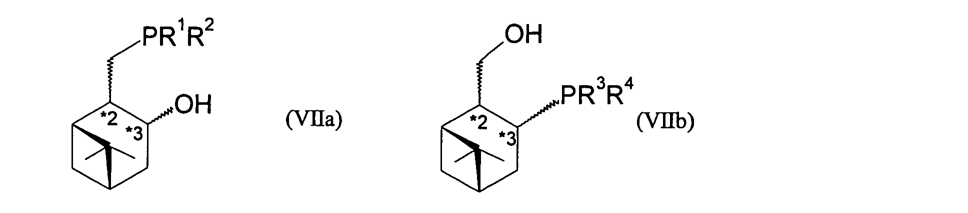
• und in einem Schritt E) die Verbindungen der Formel VIIa) und (VIIb) durch Umsetzung mit Verbindungen der Formel (VIII)
Hal-O₂SR⁵ (VIII)
in Verbindungen der Formel (IXa) und (IXb) überführt werden 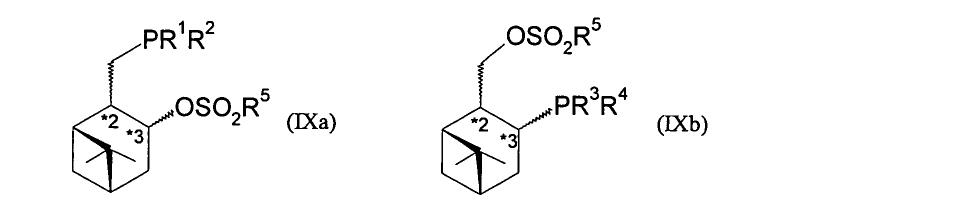
• und in einem Schritt F) die Verbindungen der Formel (IX) durch Umsetzung mit Verbindungen der Formel (Xa) bzw. (Xb)
HPR³R⁴ (Xa)
HPR¹R² (Xb)
in die Verbindungen der Formel (I) überführt werden,
wobei in den Formeln (IIa), (IIb), (IIIa), (IIIb) (IVa), (IVb), (Va), (Vb), (VIa), (VIb), (VIIa), (VIIb), (IXa), (IXb). (Xa) und (Xb) *2 und *3, R¹, R², R³ und R⁴ jeweils die gleichen Bedeutungen besitzen, wie sie in Anspruch 1 beschrieben wurden und
R⁵ in den Formeln (VIII), (IXa) und (IXb) für Alkyl, Fluoralkyl, Arylalkyl, oder Aryl steht und
Hal in den Formeln (IIIa) und (IIIb) und (VIII) jeweils für Chlor, Brom oder Iod steht.

7. Verfahren umfassend Schritt F) oder A) gemäß Anspruch 6.

8. Verfahren umfassend die Schritte E) und F) oder A) und B) gemäß Anspruch 6.

9. Verfahren umfassend die Schritte D), E) und F) oder A), B) und C) gemäß Anspruch 6.

10. Verfahren umfassend die Schritte C), D), E) und F) oder A), B) C) und D) gemäß Anspruch 6.

11. Verbindungen der Formeln ((IVa) und (IVb) gemäß Anspruch 6.

12. Folgende Verbindungen gemäß Anspruch 11:
O-Diphenylphosphanyl-trans-pinopcarveol und O-Diphenylphosphanyl-myrtenol

13. Verbindungen der Formeln (Va), (Vb) gemäß Anspruch 6

14. Folgende Verbindungen gemäß Anspruch 13: 2-(Diphenyl-phosphinoylmethyl)-6,6-dimethyl-bicyclo[3.1.1]hept-2-en und (R)-3-(Diphenyl-phosphinoyl)-6,6-dimethyl-2-methylenebicyclo[3.1.1]heptane

15. Verbindungen der Formeln (VIa), (VIb) gemäß Anspruch 6.

16. Folgende Verbindungen gemäß Anspruch 15: (2S,3R)-2-(Diphenyl-phosphinoylmethyl)-6,6-dimethyl-bicyclo[3.1.1]heptan-3-ol und (2P,3R)[3-(Diphenyl-phosphinoyl)-6,6-diinethyl-bicyclo[3.1.1]hept-2-yl]-methanol

17. Verbindungen der Formeln (VIIa), (VIIb) gemäß Anspruch 6 sowie deren Komplexe mit Boranen.

18. Folgende Verbindungen gemäß Anspruch 17: (2S,3R)-2-(Diphenyl-phosphanylmethyl)-6,6-dimethyl-bicyclo[3.1.1]heptan-3-ol und (2R,3R)[3-(Diphenyl-phosphanyl)-6,6-dimethyl-bicyclo[3.1.1]hept-2-yl]-methanol

19. Verbindungen der Formeln (IXa), (IXb) gemäß Anspruch 6.

20. Folgende Verbindungen gemäß Anspruch 19: (2S,3R)-2-(Diphenyl-phosphanylmethyl)-6,6-dimethyl-3-methansulfonyloxy-bicyclo[3.1.1]heptan und (2R,3R)[3-(Diphenyl-phosphanyl)-6,6-dimethyl-bicyclo[3.1.1]hept-2-yl]-1-methansulfonyloxy-methan

21. Übergangsmetallkomplexe enthaltend Verbindungen nach Anspruch 1, 2, 3 oder 4.

22. Katalysatoren enthaltend Übergangsmetallkomplexe nach Anspruch 21.

23. Verwendung von Katalysatoren nach Anspruch 22 zur Herstellung von stereoisomerenangereicherten Verbindungen.

24. Verfahren zur Herstellung von stereoisomerenangereicherten Verbindungen, **dadurch gekennzeichnet, dass** Katalysatoren nach Anspruch 22 verwendet werden.

25. Verfahren nach Anspruch 24, **dadurch gekennzeichnet, dass** es eine asymmetrische 1,4-Addition, eine asymmetrische Hydroformylierung, eine asymmetrische allylische Substitution, eine asymmetrische Hydrocyanierung, eine asymmetrische Heck-Reaktion, eine asymmetrische Hydroborierung oder eine asymmetrische Hydrogenierung ist.
